## Europäisches Patentamt

## European Patent Office

## Office européen des brevets

(19)

(11) Veröffentlichungsnummer: **0 249 702**
**A2**

## (12) EUROPÄISCHE PATENTANMELDUNG

(21) Anmeldenummer: **87105204.9**

(22) Anmeldetag: **08.04.87**

(51) Int. Cl.⁴: **B 01 D 53/14**

(30) Priorität: **18.04.86 DE 3613110**

(43) Veröffentlichungstag der Anmeldung: **23.12.87**
**Patentblatt 87/52**

(84) Benannte Vertragsstaaten: **BE DE GR NL SE**

(71) Anmelder: **Linde Aktiengesellschaft,**
**Abraham-Lincoln-Strasse 21, D-6200 Wiesbaden (DE)**

(72) Erfinder: **Ranke, Gerhard, Dipl.-Ing., Feichtetstrasse 6,**
**D-8134 Pöcking (DE)**

(74) Vertreter: **Schaefer, Gerhard, Dr., Linde**
**Aktiengesellschaft Zentrale Patentabteilung,**
**D-8023 Höllriegelskreuth (DE)**

(54) **Verfahren zum Entfernen unerwünschter Bestandteile aus Gasen.**

(57) Es wird ein Verfahren zum Regenerieren eines in einer Druckwäsche verwendeten und mit ausgewaschenen Bestandteilen beladenen Waschmittels, das entspannt, regeneriert und in der Druckwäsche wiederverwendet wird, beschrieben. Um bei der Entspannung anfallende Entspannungsgase unter erhöhtem Druck nachbehandeln oder bei höherem Druck abgeben zu können, wird vorgeschlagen, das beladene Waschmittel in mindestens zwei Stufen (6, 9, 13) zu entspannen, die Entspannung in einer Stufe mittels eines Flüssigkeitsstrahlverdichters (9) durchzuführen und die Entspannungsgase (15) einer nachfolgenden Entspannungsstufe (13) mit dem Flüssigkeitsstrahlverdichter (9) auf erhöhten Druck zu bringen.

Beschreibung

Verfahren zum Entfernen unerwünschter
Bestandteile aus Gasen

Die Erfindung betrifft ein Verfahren zum Regenerieren
eines in einer Druckwäsche verwendeten und mit ausgewaschenen
Bestandteilen beladenen Waschmittels, das entspannt, regeneriert und in der Druckwäsche wiederverwendet wird.

Bei Druckwäschen werden zur Entspannung des beladenen
Waschmittels aus der Waschsäule auf einen niedrigeren
Druck üblicherweise Drosselventile eingesetzt. Nur bei
großen Flüssigkeitsmengen werden zur Energierückgewinnung
Entspannungsturbinen eingesetzt. Die Verwendung von Entspannungsturbinen hat trotz Energierückgewinnung folgende Nachteile:

Die Kosten der Turbinen sind sehr hoch, so daß sie sich
nur bei großer rückgewinnbarer Energie lohnen.

Bei starker Entgasung des beladenen Waschmittels treten
in der Turbine Schwierigkeiten infolge eines ungünstigen Flüssigkeits/Gasvolumen-Verhältnisses auf. Wegen Störanfälligkeit von Entspannungsturbinen muß entweder eine zweite Einheit parallel als Reserve geschaltet oder ein Drosselventil installiert werden. Bei Kopplung einer Entspannungsturbine mit der Waschmittelpumpe muß zusätzlich ein Motor angeschlossen werden, um die fehlende Pumpenenergie zu decken und um bei Ausfall der Turbine oder beim Anfahren der Anlage die gesamte Pumpenenergie zu übertragen.

Aufgrund der genannten Nachteile ist es beispielsweise bei Sauergaswäschen nur bei großen Anlagen, d.h. bei Flüssigkeitsmengen von mehreren 100 m³/h und relativ großen Druckabfällen üblich, Entspannungsturbinen einzusetzen. Andererseits besteht bei vielen Wäschen - und hier besonders oft bei physikalischen Wäschen zur Sauergasentfernung - Interesse an einer Gasverdichtung. Beispielsweise sollen Entspannungsgase in das Rohgas zurückgeführt, als Produkt für die Weiterbehandlung verwendet oder Unterdruck im Waschmittel erzeugt werden, um Gasbeladung des entspannten Waschmittels zu senken.

Üblicherweise werden für solche Verdichtungsverfahren Kompressoren verwendet. Neben dem Energieaufwand für die Verdichtung tritt als zusätzlicher Nachteil die Erwärmung des Gases im Verdichter auf. Aus diesem Grunde ist in den meisten Fällen noch ein Nachkühler zum Rückkühlen des verdichteten Gases erforderlich. Falls das verdichtete Gas weiter in der Wäsche behandelt werden muß, was insbesondere bei $H_2S$-haltigen Gasen sehr oft der Fall ist, treten durch diese Kompression neben der Kompressionsenergie auch noch Kälteverluste auf, die durch Fremdkälte kompensiert werden müssen.

Im DD-Patent 119 610 wird daher vorgeschlagen, die Verdichtung von Entspannungsgasen, die bei Vakuum anfallen, mittels eines Strahlverdichters durchzuführen. Dabei werden als Treibmittel die bei der Zwischenentspannung mit höherem Druck anfallenden Gase verwendet.

Der wesentliche Vorteil dieses Verfahrens besteht darin, daß für die Verdichtung keine externe Energie verwendet werden muß und gleichzeitig keine Anwärmung der abgesaugten Entspannungsgase auftritt. Das Verfahren ist jedoch nur anwendbar, wenn bei höherem Druck bereits eine größere Menge an Entspannungsgas anfällt und gleichzeitig alle Gase drucklos abgegeben werden können. Ein weiterer Nachteil ist im zusätzlichen Einbau von Entspannungsbehältern zu sehen, die dazu dienen, die Treibgase für die Strahlverdichter zu gewinnen.

Die Aufgabe der vorliegenden Erfindung besteht darin, ein Verfahren zur Verfügung zu stellen, bei dem bei einer Entspannung anfallende Entspannungsgase unter erhöhtem Druck nachbehandelt oder bei höherem Druck abgegeben werden können.

Diese Aufgabe wird erfindungsgemäß dadurch gelöst, daß das beladene Waschmittel in mindestens 2 Stufen entspannt wird, die Entspannung in einer Stufe mittels eines Flüssigkeitsstrahlverdichters durchgeführt wird und die Entspannungsgase einer nachfolgenden Entspannungsstufe mit dem Flüssigkeitsstrahlverdichter auf erhöhten Druck gebracht werden.

Im Rahmen der Erfindung wurde gefunden, daß neben Gas auch das beladene Waschmittel als Treibmedium im Flüssigkeitsstrahlverdichter verwendet werden kann, womit eine wesentlich größere Gasmenge verdichtet werden kann als beispielsweise bei dem Verfahren gemäß DD-Patent 119 610.

Der Flüssigkeitsstrahlverdichter arbeitet dabei auch dann, wenn bei der Drucksenkung kein oder nur sehr wenig Gas freigesetzt wird, d.h. in Fällen, bei denen das aus dem DD-Patent bekannte Verfahren nicht zur Anwendung gelangen kann.

In manchen Fällen, insbesondere, wenn mitgelöste Inertgase unter möglichst hohem Druck anfallen sollen, um mit möglichst niedrigem Energieaufwand wieder zur Druckwäsche zurückgeführt werden zu können, ist es zweckmäßig, wenn das beladene Waschmittel zunächst auf einen Zwischendruck entspannt wird, z.B. in einer Expansionsturbine, die dabei freigesetzte Gasphase vor die Druckwäsche zurückgeführt und das teilentspannte Waschmittel dem Flüssigkeitsstrahlverdichter zur weiteren Entspannung zugeführt wird. Es ist klar, daß auch in diesem Fall der zweistufigen Druckabsenkung die dabei mögliche Verdichtungsenergie zur Druckanhebung von Entspannungsgasen, die in späteren Verfahrensschritten anfallen, verwendet werden kann.

Nach einer weiteren vorteilhaften Ausführungsform des erfindungsgemäßen Verfahrens kann das beladene Waschmittel mittels mehrerer hintereinander geschalteter Flüssigkeitsstrahlverdichter stufenweise entspannt werden. Gleichzeitig können dabei die in einer nachfolgenden Entspannungsstufe freiwerdenden Gase in der vorangegangenen verdichtet werden. Der Vorteil dieser Verfahrensweise liegt darin, daß der Druck der Entspannungsgase stärker angehoben werden kann. Damit ist eine Anpassung des erfindungsgemäßen Verfahrens an die jeweiligen Prozeßbedingungen möglich.

Das erfindungsgemäße Verfahren findet bei Gasverdichtungen aufgrund sehr unterschiedlicher Erfordernisse Anwendung.

So kann ein Grund für die Gasverdichtung im Rahmen einer Sauergaswäsche die Absenkung des Sauergaspartialdruckes bei kaltregeneriertem, beladenem Waschmittel ohne Verwendung von Strippgas oder Vakuumkompression sein. Bei Druckwasser-Wäschen zur Entfernung von $CO_2$ aus Gasen kann z.B. durch Drucksenkung die Beladung des Wassers abgesenkt werden und dadurch der $CO_2$-Restgehalt im gewaschenen Produkt ohne Verwendung von Strippgas oder Vakuum, also ohne Kompressor gesenkt werden bei gleichzeitig verbesserter $CO_2$-Ausbeute.

Ein weiterer Grund für die Gasverdichtung kann die Vergrö-ßerung der $CO_2$-Ausbeute bei physikalischen Wäschen vor einer nachfolgenden Strippung sein. Auch für die Gewinnung von zusätzlicher Spitzenkälte in physikalischen Wäschen kann eine Gasverdichtung zweckmäßig sein. Schließlich kann durch eine Gasverdichtung eine Absenkung der $CO_2$-Beladung in chemi-schenWäschen vor einer Warmregenerierung oder eine Absenkung der $CO_2$-Beladung des nur durch Entspannen regenerierten Waschmittels erfolgen. Dadurch können die umgewälzte Wasch-mittelmenge - infolge der größeren $CO_2$-Aufnahme - und der Energiebedarf einer nachfolgenden Feinwäsche reduziert werden, da mit der besser regenerierten Waschmittelmenge auch das $CO_2$ besser aus dem Rohgas in der Grobwäsche ausgewaschen werden kann.

Nachfolgend sei die Erfindung anhand von in 3 Figuren schematisch dargestellten Ausführungsbeispielen näher erläutert:

Es zeigen:

Figur 1    $CO_2$-Auswaschung mit einer Druckwasserwäsche

Figur 2    Erhöhung der $CO_2$-Ausbeute bei einer physikali-schen Wäsche

Figur 3    Erzeugung von Spitzenkälte bei einer Kaltwäsche.

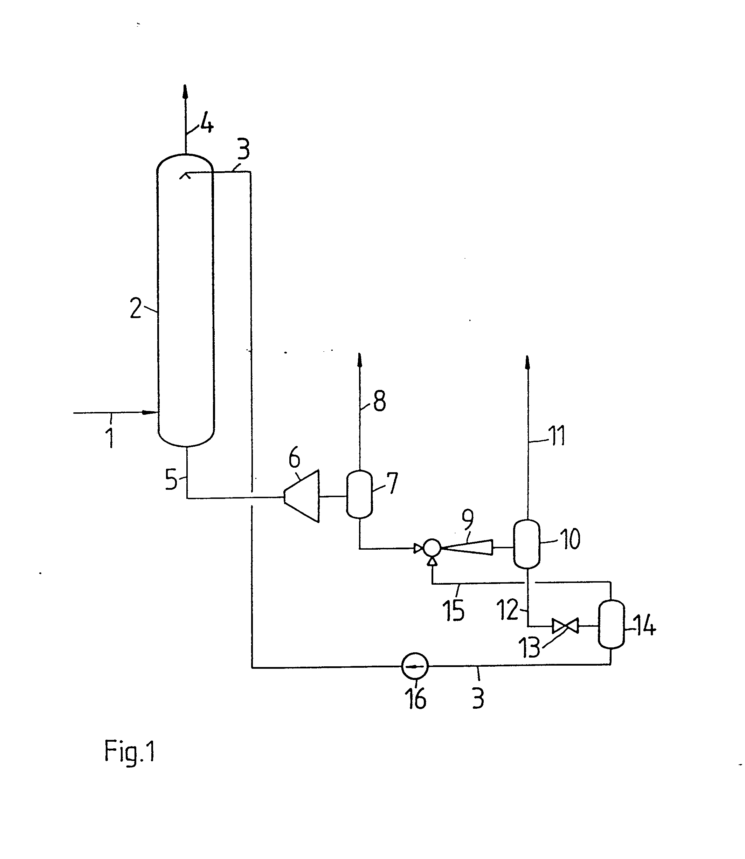

Gemäß Figur 1 werden über Leitung 1  10.000 Nm³/h Rohgas unter einem Druck von 40 bar und einer Temperatur von 30°C einer Waschsäule 2 zugeführt. Das Rohgas hat die

folgende Zusammensetzung:

$H_2$      65 Vol%

$N_2$+CO      5 -"-

$CO_2$      30 -"-

Über Leitung 3 wird die Waschsäule 2 mit 500 t/h Waschwasser beaufschlagt, das im Gegenstrom zu aufsteigendem Rohgas aus diesem das $CO_2$ aufnimmt. Über Leitung 4 kann somit reines Produktgas abgezogen werden, das nur noch maximal 1 Vol% $CO_2$ enthält.

Über Leitung 5 wird das mit $CO_2$ beladene Wasser abgezogen. Um einen $CO_2$-Restgehalt von unter 1 Vol% im Produktgas zu erhalten, wird das beladene Wasser zunächst in einer Expansionsturbine 6 auf 10 bar entspannt. Nach Abtrennung der dabei freigesetzten Gasphase über Leitung 8, nämlich 926 Nm³/h bestehend aus:

$CO_2$      76 Vol%

$H_2$+ CO      24 -"-

in einem Abscheider 7 wird das Wasser über einem Flüssigkeitsstrahlverdichter 9 auf einen Druck von 1,2 bar entspannt. Aus einem weiteren Abscheider 10 wird die dabei freigesetzte Gasphase (2.063 Nm³/h bestehend aus 95,4 Vol% $CO_2$, Rest $H_2$ + CO) über Leitung 11 unter einem Druck von 1,2 bar abgezogen. Über Leitung 12 wird das Wasser aus dem Abscheider 10 abgezogen und in einem üblichen Drosselventil 13 auf 0,3 bar weiter entspannt. In einem nachgeschalteten Abscheider 14 wird das dabei anfallende Entspannungsgas (320 Nm³/h $CO_2$ + $H_2$) über Leitung 15 abgezogen und in dem Flüssigkeitsstrahlverdichter 9 auf einen Druck von 1,2 bar angehoben. Über Leitung 3 mit Pumpe 16 wird das regenerierte

Wasser aus dem Abscheider 14 abgezogen und erneut der Waschsäule 2 aufgegeben.

Bei den bisher üblichen Verfahren wird die aus dem Abscheider 14 abgezogene Gasmenge in Leitung 15 mittels eines Vakuumkompressors verdichtet. Der hierfür erforderliche Energieaufwand beträgt ca. 22 kW. Der Hauptvorteil des erfindungsgemäßen Verfahrens gegenüber dem bisher üblichen besteht aber weniger in der Energieeinsparung als vielmehr im Wegfall des Vakuumkompressors, d.h. des Kolbenkompressors mit beweglichen Teilen, die einen verschleißanfälligen und wartungsintensiven Anlagenteil darstellen. Der Flüssigkeitsstrahlverdichter stellt demgegenüber eine wesentlich billigere und robustere Lösung dar.

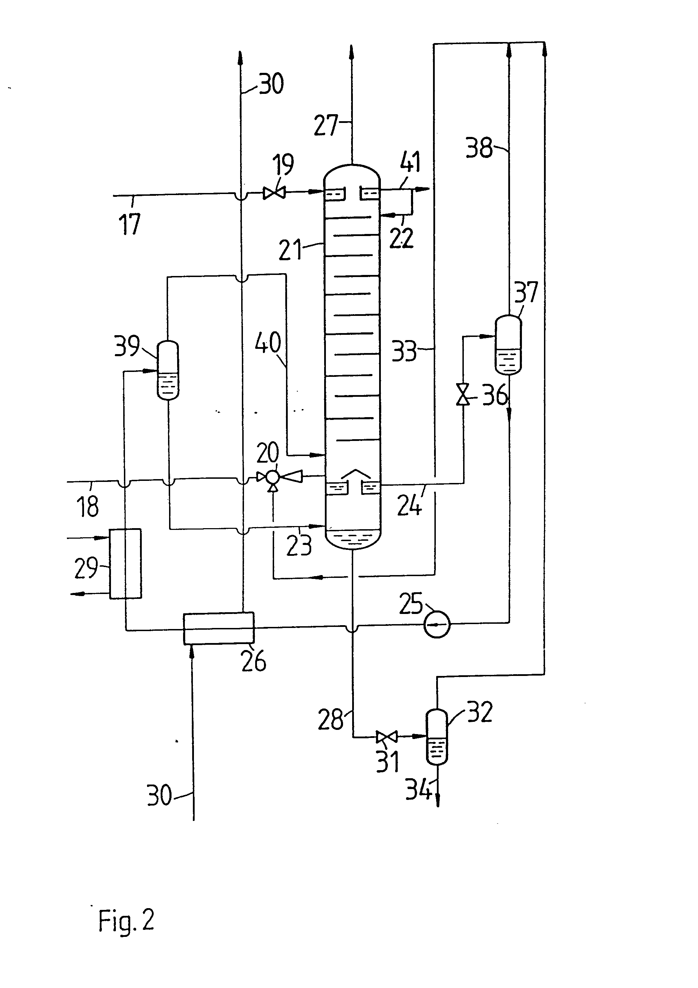

In der Figur 2 ist ein Ausschnitt des Regenerierteils einer Anlage zum Abtrennen und Gewinnen gasförmiger Komponenten, insbesondere $CO_2$, COS und $H_2S$ aus einem Gasgemisch durch physikalische Wäsche dargestellt.

Über Leitung 17 werden 55 t/h mit $CO_2$ nahezu gesättigtes Waschmethanol aus der nichtdargestellten Waschsäule mit einer Temperatur von -40°C und einem Druck von 25 bar herangeführt. Über Leitung 18 werden 45 t/h Waschmethanol herangeführt, das sich in der nichtdargestellten Waschsäule mit $CO_2$, $H_2S$ und COS beladen hat und unter einem Druck von ebenfalls 25 bar und einer Temperatur von -7°C anfällt. Dieses auch mit Schwefelverbindungen beladene Methanol stellt den ersten Waschmittelstrom dar, das nur mit $CO_2$ beladene Methanol den zweiten Waschmittelstrom.

Der erste Waschmittelstrom wird in einem Flüssigkeitsstrahlverdichter 20 auf einen Druck von 3 bar entspannt.

Der zweite Waschmittelstrom wird in einem Drosselventil 19 auf einen Druck von 3 bar entspannt. Beide Waschmittelströme werden sodann in eine Anreicherungssäule 21 eingeführt, der erste Waschmittelstrom in den Mittelteil, der zweite in den mit einem Abscheider versehenen Kopfteil. Bei der Entspannung werden jeweils gasförmige Fraktionen freigesetzt, und zwar im Falle des zweiten Waschmittelstromes eine überwiegend aus $CO_2$ bestehende Faktion, die über Kopf der Säule abströmt, und im Fall des ersten Waschmittelstromes eine sowohl $CO_2$ als auch $H_2S$ und COS enthaltende Fraktion, die im Inneren der Säule nach oben steigt. Die Anteile an $H_2S$ und COS werden in dieser gasförmigen aufsteigenden Fraktion durch einen Teil des zweiten Waschmittelstromes zurückgewaschen, der aus dem Abscheider am Säulenkopf über eine Leitung 22 in den oberen Teil der Anreicherungssäule 21 zurückgegeben wird. Dieser Teil des zweiten Waschmittelstromes beträgt 35 t.

Die über einem Kaminboden im unteren Teil der Anreicherungssäule 21 sich ansammelnden Waschmittelströme werden über eine Leitung 24 abgezogen, in einem Drosselventil 36 auf einen Zwischendruck gebracht und in einen Abscheider 37 eingeführt. Die nach der Zwischenentspannung freigesetzte gasförmige Fraktion, die $CO_2$ und geringe Anteile $H_2S$ und COS enthält, wird einer noch zu beschreibenden Leitung 33 zugeführt. Die Sumpfflüssigkeit des Abscheiders 37 wird mit Hilfe einer Flüssigkeitspumpe 25 durch Wärmetauscher 26 und 29 gefördert und anschließend über eine Leitung 23 in den untersten Teil der Anreicherungssäule 21, der lediglich als Abscheider fungiert, zurückgegeben. Dabei erwärmt sich das Waschmittel. im Wärmetausch mit durch eine Leitung 30 herangeführtem, in einem nachfolgenden nichtdargestellten Anlagenteil vollständig regeneriertem Methanol von -55°C auf -43°C sowie im Wärmetausch mit Absorptionswärme abgebendem, mit $CO_2$

vorbeladenem Methanol auf -33°C. In einem Abscheider 39 wird eine gasförmige, $CO_2$, $H_2S$ und COS enthaltende Fraktion abgetrennt und über eine Leitung 40 in die Anreicherungssäule 21 eingeführt. Die durch die Anwärmung freigesetzte gasförmige Fraktion, die wiederum vor allem $CO_2$, aber auch $H_2S$ und COS enthält, strömt durch den Kaminboden der Anreicherungssäule 21 nach oben und wird dabei ebenfalls mittels des zweiten Waschmittelstromes von den schwefelhaltigen Komponenten befreit.

Vom Kopf der Anreicherungssäule 21 werden über eine Leitung 27 23.316 Nm³/h eines ersten Produktgases abgezogen, das aus 23.000 Nm³/h $CO_2$, 247 Nm³/h $H_2$, 49 Nm³/h CO, Ar, $CH_4$ und 20 Nm³/h $N_2$ besteht. Die Reinheit des gasförmigen $CO_2$-Produktes beträgt 98,7 Vol%. Das $CO_2$-Produkt fällt mit einer Temperatur von -49°C an.

Vom Sumpf der Anreicherungssäule 21 werden 80 t/h nunmehr an $H_2S$ und COS angereichertem Methanol abgezogen. Dieses Methanol führt in gelöster Form 7.232 Nm³/h $CO_2$ sowie 1.025 Nm³/h $H_2S$ und COS mit. Es wird über eine Leitung 28 einem Drosselventil 31 zugeführt, auf einen Druck von 0,7 bar entspannt und in einen Abscheider 32 eingeführt. Die bei der Entspannung freigesetzte gasförmige Fraktion (4.896 Nm³/h $CO_2$ und 295 Nm³/h $H_2S$ und COS) wird über Leitung 33 von dem Flüssigkeitsstrahlverdichter 20 angesaugt und nach Rückverdichtung auf den Druck der Anreicherungssäule 21 dieser zugeführt.

Nach der bisher üblichen Verfahrensweise wurde diese freigesetzte Gasfraktion mittels eines Kompressors angesaugt und rückverdichtet. Dabei wurde die Gasfraktion angewärmt. Da die $H_2S$ und COS-haltige Fraktion jedoch in der Anreicherungssäule 21 bei tiefen Temperaturen mit kaltem Methanol entschwefelt werden muß, bedeutet diese Anwärmung während der Verdichtung einen Kälteverlust, der mit Fremdkälte in einem Tauscher wieder kompensiert werden mußte. Damit steigt jedoch der Energiebedarf für die Vergrößerung der $CO_2$-Ausbeute an. Mit dem erfindungsgemäßen Verfahren können der Kompressor und Nachkühler durch den Flüssigkeitsstrahlverdichter ersetzt werden, der gleichzeitig die Aufgabe eines bislang verwendeten Drosselventiles übernimmt. In diesem Drosselventil wurde die gesamte bei der Entspannung des mit $H_2S$, COS und $CO_2$ beladenen ersten Waschmittelstromes freiwerdende Energie vernichtet. Diese Energie wird nunmehr nutzbringend zur Verdichtung anfallender Entspannungsgase verwendet. Neben der Einsparung an Kompressionsenergie und Fremdkälte kann dadurch auch ein teures und wartungsintensives Anlagenteil ersetzt werden.

Vom Sumpf des Abscheiders 32 werden über Leitung 34 80 t/h Waschmethanol abgezogen und einer nichtdargestellten Strippsäule zur vollständigen Regenerierung zugeführt. Über Leitung 41 wird der nicht rückgeführte Teil des zweiten Waschmittelstromes (20 t/h) abgezogen und zum Rückwaschen von schwefelhaltigen Komponenten in der nichtdargestellten Strippsäule verwendet.

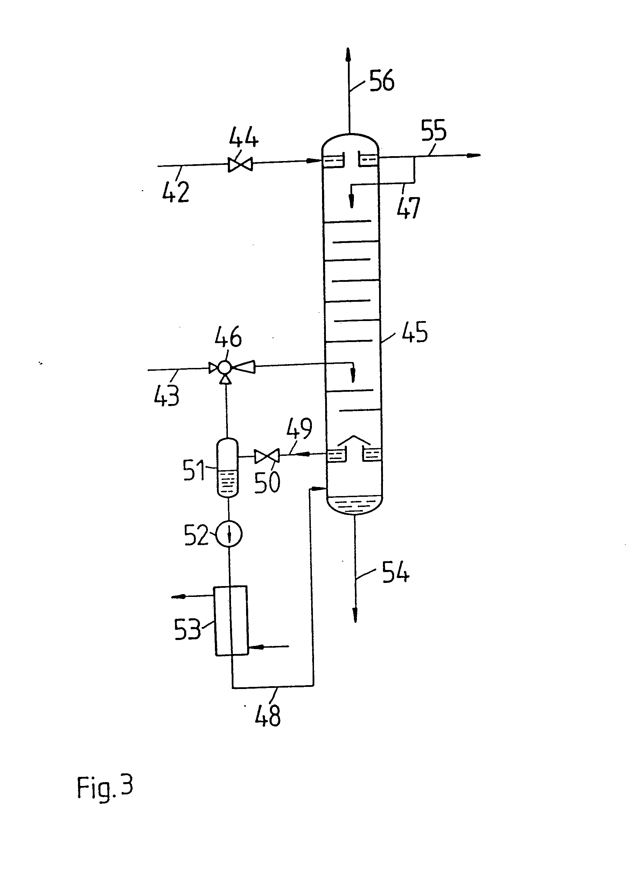

In Figur 3 ist ebenfalls nur ein Anlagenteil einer gesamten Anlage zur Gewinnung von Wasserstoff und $CO_2$ dargestellt.

Über eine Leitung 42 werden 55 t/h Methanol aus einer nichtdargestellten Waschsäule herangeführt. Dieses Methanol, das einen ersten Waschmittelstrom darstellt, fällt unter einem Druck von 27 bar und einer Temperatur von -50°C an. Es ist mit $CO_2$ nahezu gesättigt. Über Leitung 43 werden 45 t/h Methanol, das mit $CO_2$ und $H_2S$ beladen ist, mit einem Druck von 27 bar und einer Temperatur von -6°C aus derselben Waschsäule herangeführt. Dieser Methanolstrom stellt einen zweiten Waschmittelstrom dar.

Der erste Waschmittelstrom wird in einem Drosselventil 44
auf 3,5 bar entspannt und im oberen, als Abscheider dienenden Teil einer $CO_2$-Säule 45 eingeführt. Der zweite
Waschmittelstrom wird in einem Flüssigkeitsstrahlverdichter 46 auf 3,5 bar entspannt und in den mittleren
Teil der $CO_2$-Säule geleitet. In der $CO_2$-Säule erfolgt
eine Konzentrierung und Gewinnung von $CO_2$. Zu diesem Zweck
wird das in der Säule aufsteigende Gas mit 35 t/h $H_2S$-
freiem Waschmittel, das durch Leitung 47 zugeführt wird,
gewaschen. Die in der $CO_2$-Säule 45 aufsteigenden Gase
setzen sich zusammen aus den Gasen, die durch Entspannung
im Flüssigkeitsstrahlverdichter 46 gebildet werden, und
den Gasen, die durch Leitung 48 in den untersten Teil der
Säule 45 gelangen. Zur Erzeugung dieser letztgenannten
Gase wird aus einem im unteren Teil der Säule 45 befindlichen Kaminboden über Leitung 49 Flüssigkeit abgezogen,
in einem Drosselventil 50 entspannt und nach Abtrennung
der dabei freiwerdenden Entspannungsgase mit einer Pumpe
52 durch einen Wärmetauscher 53 gefördert und durch Leitung 48 erneut in die Säule eingegeben. Im Wärmetauscher
53 wird die Flüssigkeit beispielsweise gegen in einer
nachfolgenden nichtdargestellten Strippsäule vollständig
regeneriertes Methanol angewärmt, so daß ein Teil der
im Methanol gelösten Komponenten freigesetzt wird und
durch Leitung 48 ein Gas-Flüssigkeits-Gemisch in die
Säule 45 gelangt.

Durch die Entspannung im Ventil 50 entgast ein Teil
der mitgelösten Gase unter gleichzeitiger Abkühlung
des Waschmittels. Diese Entspannungsgase werden von
dem Flüssigkeitsstrahlverdichter 46 angesaugt und auf
den Druck der Säule 45 verdichtet. Damit kann ohne zusätzliche Energie Kälte auf dem tiefsten Temperaturniveau der Wäsche gewonnen und damit der gesamte Waschprozeß verbilligt werden. Die auf tiefen Temperaturen gewonnene Kälte bewirkt, daß das regenerierte Waschmittel stärker unterkühlt werden und dementsprechend die Waschmittelmenge oder Bodenzahl in der Waschsäule reduziert werden kann.

Das durch Leitung 42 zur Säule 45 geführte Methanol kann ganz oben in den Kopf der Säule eingespeist werden, da das bei der Entspannung in 44 freigesetzte Gas reines $CO_2$ ist, das nicht mehr gewaschen zu werden braucht. Im Kopf der $CO_2$-Säule 45 herrscht eine Temperatur von −45°C. Das durch Leitung 56 abziehende Gas (25.405 Nm³/h) hat folgende Zusammensetzung:

| | |
|---|---|
| $H_2$ | 1,34 mol% |
| $N_2+Ar+CH_4$ | 0,14 mol% |
| CO | 0,12 mol% |
| $CO_2$ | 98,04 mol% |
| $H_2S$ | 2 ppm |

Die dem Gas innewohnende Kälte wird in der Regel noch auf das Rohgas übertragen (nichtdargestellt), so daß das $CO_2$-Produkt dann mit einer Temperatur von 27°C und einem Druck von 2 bar zur Verfügung steht.

Vom Sumpf der Säule werden über Leitung 54 80 t/h Methanol, das 1.841 Nm³/h $H_2S$ und 7.232 Nm³/h $CO_2$ enthält, abgezogen und der nichtdargestellten Strippsäule zur vollständigen Regenerierung zugeführt. Über Leitung 45 werden 20 t/h Methanol zum Rückwaschen von $H_2S$ auf die Strippsäule aufgegeben.

## Patentansprüche

1. Verfahren zum Regenerieren eines in einer Druckwäsche verwendeten und mit ausgewaschenen Bestandteilen beladenen Waschmittels, das entspannt, regeneriert und in der Druckwäsche wiederverwendet wird, dadurch gekennzeichnet, daß das beladene Waschmittel in mindestens 2 Stufen entspannt wird, die Entspannung in einer Stufe mittels eines Flüssigkeitsstrahlverdichters durchgeführt wird und die Entspannungsgase einer nachfolgenden Entspannungsstufe mit dem Flüssigkeitsstrahlverdichter auf erhöhten Druck gebracht werden.

2. Verfahren nach Anspruch 1, dadurch gekennzeichnet, daß das beladene Waschmittel entspannt, die dabei freigesetzte Gasphase vor die Druckwäsche zurückgeführt und das teilentspannte Waschmittel dem Flüssigkeitsstrahlverdichter zur weiteren Entspannung zugeführt wird.

3. Verfahren nach Anspruch 1 oder 2, dadurch gekennzeichnet, daß das beladene Waschmittel mittels hintereinander geschalteter Flüssigkeitsstrahlverdichter stufenweise entspannt wird.

Fig.1

0249702

Fig. 2

Fig.3